# FASCICULE DE BREVET EUROPEEN

(11) **EP 1 431 650 B1**
(45) Date de publication et mention de la délivrance du brevet: **30.05.2007**
(21) Numéro de dépôt: 03104763.2
(22) Date de dépôt: 17.12.2003
(51) Int. Cl.: F16L 59/02

(54) **Complexe de protection thermique**
Thermischer Isolationsaufbau
Thermal insulation structure

(30) Priorité: 19.12.2002 FR 0216182
(43) Date de publication de la demande: 23.06.2004
(73) Titulaire: Cryospace l'air liquide aerospatiale, 78133 Les Mureaux Cédex (FR)
(72) Inventeur: Cargnello, Rémo, 78130 Les Mureaux (FR); Borromee, Alain, 78150 Le Chesnay (FR)
(74) Mandataire: Poulin, Gérard

(56) Documents cités:
- DE-B- 1 001 070
- GB-A- 802 986
- US-A- 3 941 159

## Description

### DOMAINE TECHNIQUE

L'invention concerne l'utilisation d'un complexe de protection thermique, conçu pour assurer la protection thermique d'un équipement ou d'une structure cryogénique, vis à vis d'une agression thermique extérieure.

Le complexe peut être utilisé pour assurer l'isolation thermique d'un équipement ou d'une structure cryogénique vis à vis d'un flux aérothermique externe (isolation "chaude") et/ou pour limiter les entrées thermiques dans un équipement ou une structure cryogénique (isolation "froide").

### ETAT DE LA TECHNIQUE ANTERIEURE

Lorsqu'on désire assurer la protection thermique d'un équipement ou d'une structure cryogénique, il est d'usage de revêtir celui-ci d'un matériau thermiquement isolant.

Dans les structures existantes, de nombreuses techniques sont utilisées pour monter les matériaux thermiquement isolants sur les structures cryogéniques à protéger. Parmi ces techniques, les plus couramment utilisées sont :
- le collage ou le soudage lorsque le matériau de protection thermique est un matériau solide ;
- la projection ou le moulage, par injection ou par remplissage, lorsque le matériau de protection thermique est un matériau à bases liquides ;
- l'assemblage par fixation mécanique dans le cas où le matériau de protection thermique est un produit fini.

Toutes ces techniques connues remplissent bien leurs fonctions. Cependant, dans la pratique, leur mise en oeuvre est souvent rendue plus longue et plus complexe par le fait qu'elles nécessitent d'autres technologies.

Ainsi, lorsqu'on colle, projette ou moule un matériau thermiquement isolant sur une structure cryogénique à protéger, une préparation de surface est nécessaire, voir indispensable, indépendamment de la nature de la structure. Cette préparation de surface s'effectue généralement par un procédé chimique dans le cas de surfaces de petites dimensions ou de formes complexes ou par un procédé mécanique dans le cas de grandes surfaces ou de formes simples.

De façon comparable, quand le matériau thermiquement isolant est assemblé à la structure cryogénique par des fixations mécaniques, des opérations préalables de perçage, taraudage, rivetage ou autres sont nécessaires pour assurer l'interface entre le matériau et la structure à protéger.

Ces opérations préalables qui viennent s'ajouter aux techniques d'assemblage proprement dites engendrent des coûts non négligeables, voir prohibitifs sur certaines applications. Ainsi, par exemple, le recours à un traitement de surface par un procédé chimique nécessite espace, main d'oeuvre, qualifications, servitudes, entretiens, délais et investissements.

De surcroît, lorsque la mise en oeuvre des opérations préalables additionnelles prend beaucoup de temps, la durée du cycle de production est augmentée.

Un autre problème réside dans le fait que la plupart des matériaux thermiquement isolants qui existent actuellement nécessitent une finition. Selon la nature des matériaux, cette finition peut être effectuée à différents stades de la fabrication.

A titre d'exemple, la finition peut consister en un ponçage assurant une mise à hauteur vis à vis de la définition géométrique ou une amélioration de l'aspect visuel. La finition peut aussi comprendre une projection permettant d'apporter des caractéristiques complémentaires à l'isolation, telles que des propriétés antistatiques ou hydrofuges. La finition peut également consister en un usinage pour créer une zone sans isolation ou encore un collage permettant de mettre en place une embase de câblage.

Ainsi, quelle que soit la nature du matériau de protection thermique utilisé, le nombre des opérations effectuées lors de la fabrication peut varier en fonction des besoins. Par conséquent, cela engendre, dans la plupart des cas, des coûts et des délais de production supplémentaires.

Encore un autre problème posé par les protections thermiques peut découler du cahier des charges, c'est-à-dire des spécifications techniques auxquelles la protection thermique est soumise. Ce problème est particulièrement important lorsque l'isolation thermique doit répondre à des exigences fonctionnelles sévères.

Ainsi, dans le cas particulier où la protection thermique est soumise à des températures cryogéniques comprises entre 20 et 90 K, puis à des flux thermiques importants engendrant des températures de plusieurs centaines de degrés, l'isolation est assurée soit par des protections thermiques très coûteuses, soit, plus généralement, à l'aide d'une double protection.

En effet, dans le domaine cryogénique, les mousses à cellules fermées qui sont fréquemment employées résistent mal aux hautes températures, alors que les protections thermiques utilisées contre des flux thermiques engendrant de fortes températures finissent par se fissurer à très basses températures. Ce phénomène est lié, le plus souvent, au fait que le matériau thermiquement isolant subit un important choc thermique induit par la variation brutale de la température.

Pour toutes ces raisons, l'industrialisation d'une isolation thermique au moyen des différentes techniques connues est, dans de nombreux cas, difficilement rentable financièrement.

Le document US 2 825 673 décrit un dispositif d'isolation thermique recouvrant une tuyauterie. Le dispositif comporte un support dont une face tournée vers le tuyauterie porte un matériau isolant. Des attaches formées sur des bords opposés du support assurent la fixation du dispositif autour de la tuyauterie.

### EXPOSÉ DE L'INVENTION

L'invention a précisément pour objet un procédé de protection thermique d'une structure cryogénique selon la revendication 1 et une structure cryogénique protégée thermiquement par un complexe selon la revendication 10 dont la conception originale permet d'envisager une production en série à un coût industriel raisonnable.

Conformément à l'invention, ce résultat est obtenu au moyen d'un complexe de protection thermique d'une structure cryogénique, qui comprend un support souple, une protection thermique souple recouvrant au moins une face du support, ledit complexe étant apte à être fixé sur une structure cryogénique par collage et le support souple étant équipé de moyens de liaison mécaniques aptes à appliquer une pression entre le complexe et la structure cryogénique à protéger.

Etant donné que la protection thermique souple est montée sur un support souple, préalablement à la fixation de celui-ci sur la structure à protéger, le temps et le coût de montage de la protection thermique sur ladite structure sont sensiblement réduits par rapport à ceux des protections thermiques existantes.

Avantageusement, le support souple présente des dimensions supérieures à celles de la protection thermique, de telle sorte que les bords du support soient situés au-delà de ceux de la protection thermique qui le recouvre.

De préférence, le support souple est un tissu réalisé en un matériau choisi dans le groupe comprenant les matériaux textiles, métalliques, composites et plastiques.

Les moyens de liaison mécaniques sont, avantageusement, montés sur les bords du support souple.

De préférence, les moyens de liaison mécaniques sont choisis dans le groupe comprenant les systèmes à glissière, les systèmes auto-agrippants et les systèmes d'encliquetage par pression.

La protection thermique est choisie, selon l'application envisagée, parmi les protections thermiques contre le chaud et les protections thermiques contre le froid.

En variante, le support souple est revêtu d'une protection thermique contre le chaud sur une face et d'une protection thermique contre le froid sur l'autre face.

Le support souple peut avantageusement être choisi de façon à présenter au moins une caractéristique telle que l'étanchéité aux fluides, la résistance mécanique, la résistance thermique, le caractère ignifuge, la protection anti-ultraviolets, la conductibilité électrique et l'isolation électrique.

Dans un mode de réalisation préféré, appliqué à la protection d'une structure cryogénique en forme de tube, la protection thermique entoure complètement la structure cryogénique et est fixée sur celle-ci par collage et le support souple fait au moins deux tours autour de la protection thermique.

### BRÈVE DESCRIPTION DES DESSINS

On décrira à présent, à titre d'exemples illustratifs et non limitatifs, différents modes de réalisation de l'invention, en se référant aux dessins annexés, dans lesquels :
La figure 1 est une vue en coupe schématique qui représente, sur les parties gauche et droite, deux modes de réalisation de protection thermique conforme à l'invention, monté sur une surface sensiblement plane d'une structure cryogénique à protéger.
La figure 2 est une vue en coupe comparable à la figure 1, qui illustre l'utilisation de plusieurs complexes de protection thermique conformes à l'invention pour isoler en totalité une surface extérieure de la structure cryogénique à protéger.
La figure 3 est une vue en coupe comparable aux figures 1 et 2, qui représente un complexe de protection thermique, avant sa mise en place sur une structure cryogénique à protéger de section circulaire.
La figure 4 est une vue comparable à la figure 3, qui représente le complexe de protection thermique monté sur la structure cryogénique à protéger de section circulaire.
La figure 5 est une vue en coupe comparable à la figure 4, qui représente un autre mode de réalisation d'un complexe de protection thermique monté sur une structure cryogénique à protéger de section circulaire.

### EXPOSÉ DÉTAILLÉ DE MODES DE RÉALISATION PARTICULIERS

Conformément à l'invention, il est proposé d'assurer la protection thermique d'une structure cryogénique au moyen d'un complexe composé d'un support souple et d'une protection thermique souple recouvrant au moins l'une des faces du support souple.

Le support souple peut prendre différentes formes selon l'application envisagée. Ainsi, ce support peut notamment être constitué par un tissu, une armature ou un film. Dans le cas où un tissu ou une armature est utilisé, le maillage peut être plus ou moins fin. Selon le cas, le support souple peut notamment être réalisé en un matériau textile, métallique, composite ou plastique (tissu aramide). Comme on le verra plus en détails par la suite, les dimensions du support souple sont généralement supérieures à celles de la protection thermique.

Il est à noter que le support souple peut contribuer à améliorer les caractéristiques de la protection thermique, telles que sa résistance mécanique. Il peut aussi être utilisé pour apporter à l'isolation thermique des caractéristiques supplémentaires qu'il n'est pas possible d'obtenir avec les techniques existantes.

Parmi ces caractéristiques supplémentaires, on citera à titre d'exemples la possibilité de rendre le support souple étanche, de l'assainir, de le renforcer thermiquement ou mécaniquement, de le rendre électriquement conducteur ou, au contraire, électriquement isolant, de l'ignifuger, de le colmater, de le rendre imperméable aux rayons ultraviolets, etc.. Il est à noter que ces caractéristiques, qui sont obtenues par un traitement approprié du support souple, peuvent être prévues isolément ou éventuellement combinées entre elles, sans sortir du cadre de l'invention.

D'autre part, la ou les protections thermiques équipant le support souple peuvent être de tout type, selon l'application envisagée. Ainsi, il peut s'agir selon les cas soit d'une ou plusieurs protections thermiques "chaudes", destinées à protéger la structure contre une agression thermique de haute température, soit d'une ou plusieurs protections thermiques "froides", destinées à être utilisées dans le domaine cryogénique, soit encore de ces deux types de protections thermiques réunies dans le même complexe.

Le complexe de protection thermique qui réunit un support souple et une ou plusieurs protections thermiques souples, est réalisé à l'avance, c'est-à-dire avant que ce complexe soit monté sur la structure cryogénique à protéger. Par rapport aux techniques connues à ce jour, cette caractéristique permet de disposer d'une plus grande souplesse en ce qui concerne l'isolation de la structure lors de sa fabrication. En particulier, la fixation de l'isolation sur la structure cryogénique à protéger peut être simplifiée, dans la plupart des cas, et différents problèmes inhérents aux techniques d'isolation existantes sont résolus.

Ainsi, par exemple, lorsque le support souple est un tissu, son adhérence sur la plupart des matériaux constituant les supports à protéger peut être obtenue assez facilement par un simple dégraissage manuel effectué au moyen d'un chiffon imbibé d'un produit de dégraissage tel que de l'alcool.

Le support souple du complexe permet aussi de recevoir un système de liaison mécanique tel que, par exemple, un système du type fermeture à glissière, bande auto-agrippante ou à boutons pressions. Un tel système de liaison mécanique présente une grande simplicité de mise en oeuvre. Il permet d'appliquer une pression entre le complexe et la structure cryogénique.

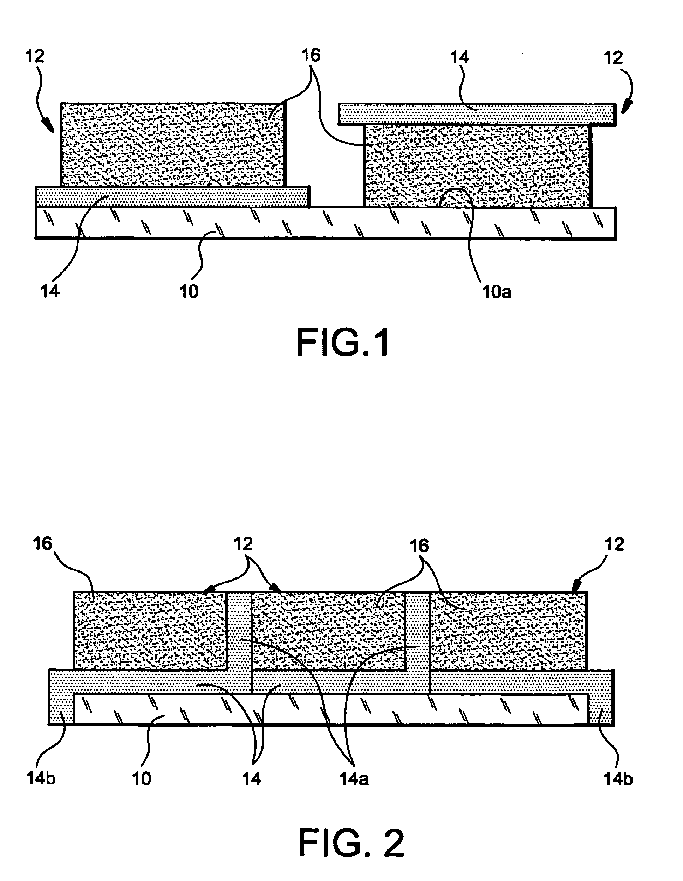

On décrira à présent, en se référant successivement aux moitiés gauche et droite de la figure 1, un premier et un deuxième modes de réalisation préférés d'un complexe de protection thermique.

Sur la figure 1, la structure cryogénique à protéger est désignée par la référence 10. Cette structure 10 peut être réalisée en un matériau quelconque, tel qu'un métal, un alliage métallique, un matériau composite ou autre, sans sortir du cadre de l'invention.

Conformément à l'invention, un complexe de protection thermique 12 est fixé sur l'une des faces de la structure cryogénique 10, de façon à recouvrir ladite face au moins en partie. Dans le cas de la figure 1, cette face est la face supérieure plane 10a de ladite structure. Comme on le verra par la suite, la face de la structure 10 sur laquelle est fixé le complexe 12 n'est pas nécessairement plane et peut présenter une forme variable selon l'application considérée.

Dans les deux modes de réalisation représentés sur les moitiés gauche et droite de la figure 1, le complexe de protection thermique 12 comprend un support souple 14 dont l'une des faces est recouverte d'une protection thermique souple 16. Les deux modes de réalisation diffèrent essentiellement l'un de l'autre par leur sens de fixation sur la structure cryogénique 10 à protéger. Ainsi, dans le mode de réalisation représenté sur la moitié gauche de la figure 1, le complexe 12 est fixé sur la structure 10 de telle sorte que le support souple 14 soit interposé entre la structure 10 et la protection thermique 16. Au contraire, dans le mode de réalisation illustré sur la partie droite de la figure 1, le complexe 12 est fixé sur la structure 10 de façon telle que ce soit la protection thermique 16 qui se trouve placée entre la structure 10 et le support souple 14.

Comme on l'a également représenté sur la figure 1, le support souple 14 présente de préférence des dimensions supérieures à celles de la protection thermique 16, de façon telle que les bords du support 14 soient situés au-delà de ceux de la protection thermique 16 qui recouvre ledit support.

Les modes de réalisation illustrés sur la figure 1 se caractérisent également par le fait que la surface à isoler thermiquement est plus petite que la surface 10a sur laquelle le complexe 12 doit être monté.

Dans tous les cas, le complexe 12 est fixé sur la structure cryogénique 10 par collage.

Dans le premier mode de réalisation illustré sur la moitié gauche de la figure 1, l'adhérence du complexe 12 sur la structure cryogénique 10 à protéger est améliorée par le fait que la surface du support souple 14 fixée sur la structure est supérieure à la surface qui est isolée thermiquement par la protection thermique 16. Cet agencement se traduit par une augmentation de la contrainte à la rupture du complexe 12, qui correspond à l'excédent de surface du support souple 14 par rapport à la protection thermique 16.

Comme on l'a déjà mentionné auparavant, le support souple 14 du complexe 12 peut notamment être recouvert d'une protection ultraviolette, de façon à empêcher une dégradation rapide de la protection thermique 16 si celle-ci vieillit rapidement en présence d'un rayonnement ultraviolet. Dans ce cas, le support souple 14 peut protéger la protection thermique 16 en recouvrant soit uniquement la zone soumise au rayonnement, soit la totalité de la protection thermique par emprisonnement, comme l'illustre la moitié droite de la figure 1.

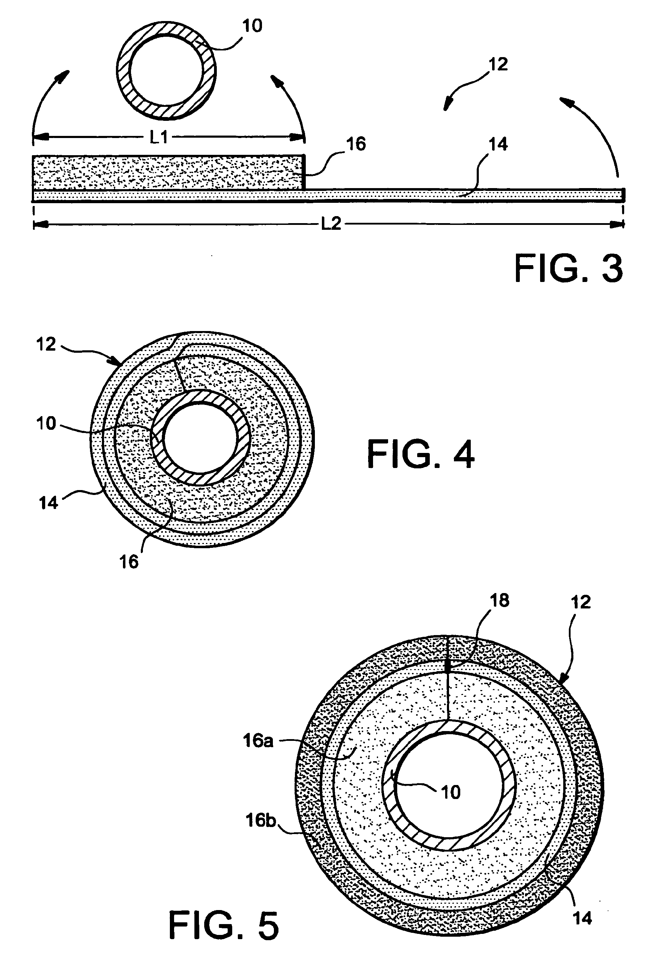

Dans un troisième mode de réalisation de l'invention illustré sur la figure 3, on utilise plusieurs complexes de protection thermique 12 juxtaposés pour isoler thermiquement la totalité de la surface 10a de la structure cryogénique 10. L'agencement est alors tel que la surface à isoler thermiquement est identique à la surface 10a de la structure 10 à protéger.

Comme dans le premier et le deuxième modes de réalisation décrits précédemment en référence à la figure 1, l'adhérence du complexe 12 sur la structure à protéger 10 est améliorée en donnant au support 14 de chacun des complexes une surface supérieure à celle de la protection thermique 16.

De façon plus précise, comme on le voit sur la figure 3, les bords des supports souples 14 de chacun des complexes 12 qui font saillie au-delà des bords des protections thermiques 16 de ces complexes sont repliés soit en 14a entre les bords des protections thermiques 16, soit en 14b le long des bords de la structure à protéger 10.

Les figures 3 et 4 illustrent un quatrième mode de réalisation de l'invention. Ce mode de réalisation concerne plus précisément l'isolation d'un tube cryogénique 10, de section sensiblement circulaire.

Comme l'illustre en particulier la figure 3, on fabrique alors un complexe 12 constitué par l'assemblage d'un support souple 14 et d'une protection thermique 16 également souple. La largeur L1 de la protection thermique 16 est égale à la circonférence extérieure du tube 10 et la largeur L2 du support 14 est au moins égale à deux fois la circonférence extérieure du tube 10 recouvert de la protection thermique 16, de façon à pouvoir effectuer au moins deux tours.

Le complexe 12 peut notamment être fabriqué en utilisant comme support souple 14 un tissu tel que du Nomex (marque déposée) non enduit et en projetant, sur une largeur de ce tissu correspondant à la circonférence extérieure du tube 10, une protection thermique en épaisseur suffisante (par exemple, trois à six millimètres). Cette protection thermique 16 est choisie parmi les protections thermiques souples et, de préférence, parmi les protections thermiques de type silicone chargé, facile à projeter par pulvérisation.

Comme l'illustre plus précisément la figure 4, l'isolation du tube cryogénique 10 est ensuite obtenue en enroulant le complexe 12 autour dudit tube, de façon telle que la protection thermique souple 16 entoure intégralement le tube 10 et soit plaquée et maintenue sur la surface extérieure de celui-ci par le bord en saillie du tissu formant le support souple 14. Le bord en saillie du tissu formant le support souple 14 entoure alors intégralement la protection thermique 16 et en assure le maintien grâce à son imprégnation par un adhésif.

Dans l'agencement qui précède, on voit donc que la fixation du complexe 12 sur le tube 10 n'est pas assurée uniquement par un collage de la protection thermique sur le tube, mais aussi par l'action d'encerclement de la partie excédentaire du tissu adhésif qui l'entoure.

Dans une application préférée de ce quatrième mode de réalisation de l'invention, le tube 10 à isoler peut notamment faire partie d'une ligne de pressurisation ou d'alimentation en ergol équipant un lanceur. Dans ce cas, un fluide cryogénique tel que, par exemple, de l'hydrogène à 20 K ou de l'oxygène à 90 K circule dans le tube 10 à isoler.

Afin de satisfaire à une bonne tenue aux températures cryogéniques, l'adhésif utilisé appartient alors avantageusement à la famille des époxydes. Il peut alors s'agir notamment de l'Araldite (marque déposée) AY103/HY953F, commercialisée par la Société VANTICO, qui conserve ses propriétés jusqu'à une température de 20K. en variante, pour une durée de vie plus courte, l'adhésif peut aussi être un polyuréthanne constitué d'un polyol et d'un isocyanate.

Des essais de 16 cycles consécutifs de mise en froid ont montré qu'un complexe ainsi réalisé permet d'éviter une fissuration de la protection thermique lors du remplissage de la ligne de pressurisation en ergol et reste fixé sur la ligne pendant toute la durée de sa mission.

Dans cette application particulière, le tube 10 est protégé avantageusement par une première protection thermique de type "froide", prévue pour empêcher le liquide cryogénique de se transformer en gaz par effet d'échauffement et par une protection thermique de type "chaude", prévue pour luter contre les effets aérothermiques lorsque le lanceur est en vol.

Selon un mode de réalisation particulier (non représenté) la protection thermique chaude est alors intégrée à un complexe 12 tel que celui qui vient d'être décrit en se référant aux figures 3 et 4 et la protection thermique froide est ensuite rapportée autour de ce complexe, par exemple sous la forme de deux demi coquilles d'isolation en polystyrène. Les demi coquilles peuvent notamment être maintenues sur le complexe par un adhésif double face.

Dans le mode de réalisation qui vient d'être décrit, il est à noter que la protection thermique froide est larguée automatiquement en vol, par arrachement. Cette caractéristique permet de réduire le mètre couple lorsque le lanceur est en vol, tout en assurant la réduction des flux thermiques entrant dans la ligne de pressurisation lorsque le lanceur est au sol.

Dans un autre mode de réalisation illustré sur la figure 5, on utilise un complexe de protection thermique 12 qui intègre à la fois une protection thermique froide 16a et une protection thermique chaude 16b. Le complexe 12 assure alors à la fois l'isolation "chaude" et l'isolation "froide" de la structure 10 à protéger, tout en étant mis en place sur celle-ci en une seule opération.

Dans le mode de réalisation de la figure 5, le complexe de protection thermique 12 peut notamment être fabriqué en projetant la protection thermique chaude 16b sur l'une des faces d'un support souple 14 tel qu'un tissu, dont la première face est revêtue, par collage, de la protection thermique froide 16a.

Les protections thermiques 16a et 16b sont alors toutes deux suffisamment souples pour permettre la mise en forme du complexe 12 autour du tube 10 formant la structure à protéger. En particulier, la protection thermique froide 16a peut être réalisée en une mousse copolymère éthylène acétate de vinyle, caractérisée par une très grande souplesse.

Comme l'illustre la figure 5, les dimensions du support souple 14 et des protections thermiques souples 16a et 16b sont alors identiques et correspondent à celles de la surface à protéger du tube formant la structure 10.

Les bords adjacents du support souple 14 sont alors équipés de moyens de liaison mécanique 18 (figure 5) tels qu'une fermeture à glissière une bande auto agrippante ou autre. La fixation du complexe sur le tube peut alors être réalisée rapidement, en une seule opération, en évitant de multiples opérations de production. Cet agencement permet d'appliquer une pression entre le complexe et le tube et, évite notamment l'utilisation d'un sac à vide, habituellement indispensable pour assurer le collage, ce qui simplifie considérablement la fabrication.

L'utilisation de tels moyens de fixation mécanique permet aussi de rendre l'isolation démontable, ce qui n'est pas le cas des isolations connues à ce jour.

## Revendications

1. Procédé de protection thermique d'une structure cryogénique (10), **caractérisé en ce qu'**il comprend la fixation d'un complexe de protection thermique (12) sur la structure cryogénique (10), ledit complexe (12) comprenant un support souple (14), une protection thermique souple (16) recouvrant au moins une face du support (14), ledit complexe (12) étant apte à être fixé sur la structure cryogénique (10) par collage et le support souple (14) étant équipé de moyens de liaison mécaniques (18) aptes à appliquer une pression entre le complexe (12) et la structure cryogénique (10) protégée.

2. Procédé de protection thermique selon la revendication 1, dans lequel le support souple (14) présente des dimensions supérieures à celles de la protection thermique (16), de telle sorte que les bords du support (14) soient situés au-delà de ceux de la protection thermique (16) qui le recouvre.

3. Procédé de protection thermique selon l'une quelconque des revendications 1 et 2, dans lequel le support souple (14) est un tissu réalisé en un matériau choisi dans le groupe comprenant les matériaux textiles, métalliques, composites et plastiques.

4. Procédé de protection thermique selon l'une quelconque des revendications précédentes, dans lequel les moyens de liaison mécaniques (18) sont montés sur les bords du support souple (14).

5. Procédé de protection thermique selon l'une quelconque des revendications précédentes, dans lequel les moyens de liaison mécaniques (18) sont choisis dans le groupe comprenant les systèmes à glissière, les systèmes auto-agrippants et les systèmes d'encliquetage par pression.

6. Procédé de protection thermique selon l'une quelconque des revendications précédentes, dans lequel la protection thermique (16) est choisie dans le groupe comprenant les protections thermiques contre le chaud (16b) et les protections thermiques contre le froid (16a).

7. Procédé de protection thermique selon la revendication 6, appliqué à la protection d'une structure cryogénique (10) en forme de tube, dans lequel la protection thermique (16) entoure complètement la structure cryogénique (10) et est fixée sur celle-ci par collage et dans lequel le support souple (14) fait au moins deux tours autour de la protection thermique (16).

8. Procédé de protection thermique selon l'une quelconque des revendications 1 à 5, dans lequel le support souple (14) est revêtu d'une protection thermique contre le chaud (16b) sur une face et d'une protection thermique contre le froid (16a) sur l'autre face.

9. Procédé de protection thermique selon l'une quelconque des revendications précédentes, dans lequel le support souple (14) présente au moins une caractéristique supplémentaire choisie dans le groupe comprenant l'étanchéité aux fluides, la résistance mécanique, la résistance thermique, le caractère ignifuge, la protection anti-ultraviolets, la conductibilité électrique et l'isolation électrique.

10. Structure cryogénique (10) protégée thermiquement par un complexe (12), **caractérisé en ce que** ledit complexe (12) comprend un support souple (14), une protection thermique souple (16) recouvrant au moins une face du support (14), ledit complexe (12) étant apte à être fixé sur la structure cryogénique (10) par collage et le support souple (14) étant équipé de moyens de liaison mécaniques (18) aptes à appliquer une pression entre le complexe (12) et la structure cryogénique (10) protégée.

11. Structure cryogénique (10) protégée thermiquement par un complexe (12) selon la revendication 10, dans laquelle le support souple (14) présente des dimensions supérieures à celles de la protection thermique (16), de telle sorte que les bords du support (14) soient situés au-delà de ceux de 1a protection thermique (16) qui le recouvre.

12. Structure cryogénique (10) protégée thermiquement par un complexe (12) selon l'une quelconque des revendications 10 et 11, dans laquelle le support souple (14) est un tissu réalisé en un matériau choisi dans le groupe comprenant les matériaux textiles, métalliques, composites et plastiques.

13. Structure cryogénique (10) protégée thermiquement par un complexe (12) selon l'une quelconque des revendications précédentes, dans laquelle les moyens de liaison mécaniques (18) sont montés sur les bords du support souple (14).

14. Structure cryogénique (10) protégée thermiquement par un complexe (12) selon l'une quelconque des revendications précédentes, dans laquelle les moyens de liaison mécaniques (18) sont choisis dans le groupe comprenant les systèmes à glissière, les systèmes auto-agrippants et les systèmes d'encliquetage par pression.

15. Structure cryogénique (10) protégée thermiquement par un complexe (12) selon l'une quelconque des revendications précédentes, dans laquelle la protection thermique (16) est choisie dans le groupe comprenant les protections thermiques contre le chaud (16b) et les protections thermiques contre le froid (16a).

16. Structure cryogénique (10) protégée thermiquement par un complexe (12) selon la revendication 15, la structure cryogénique (10) étant en forme de tube, la protection thermique (16) dudit complexe (12) entourant complètement la structure cryogénique (10) et étant fixée sur celle-ci par collage et dans laquelle le support souple (14) fait au moins deux tours autour de la protection thermique (16).

17. Structure cryogénique (10) protégée thermiquement par un complexe (12) selon l'une quelconque des revendications 10 à 14, dans laquelle le support souple (14) est revêtu d'une protection thermique contre le chaud (16b) sur une face et d'une protection thermique contre le froid (16a) sur l'autre face.

18. Structure cryogénique (10) protégée thermiquement par un complexe (12) selon l'une quelconque des revendications précédentes, dans laquelle le support souple (14) présente au moins une caractéristique supplémentaire choisie dans le groupe comprenant l'étanchéité aux fluides, la résistance mécanique, la résistance thermique, le caractère ignifuge, la protection anti-ultraviolets, la conductibilité électrique et l'isolation électrique.

## Claims

1. Process for the thermal protection of a cryogenic structure (10), **characterised in that** it comprises the attachment of a thermal protection complex (12) to the cryogenic structure (10), the said complex (12) comprising a flexible support (14), flexible thermal protection (16) covering at least one surface of the support (14), the said complex (12) being suitable for attachment to the cryogenic structure (10) by adhesive bonding and the flexible support (14) being equipped with mechanical attachment means (18) adapted to apply pressure between the complex (12) and the protected cryogenic structure (10).

2. Process for thermal protection according to claim 1, in which the flexible support (14) has dimensions greater than those of the thermal protection (16) so that the edges of the support (14) are located beyond those of the thermal protection (16) covering it.

3. Process for thermal protection according to either of claims 1 and 2, in which the flexible support (14) is a fabric made from a material selected from the group comprising textile, metal, composite and plastics materials.

4. Process for thermal protection according to any one of the preceding claims, in which the mechanical attachment means (18) are mounted on the edges of the flexible support (14).

5. Process for thermal protection according to any one of the preceding claims, in which the mechanical attachment means (18) are selected from the group comprising slider systems, self-gripping systems and pressure snap-connection systems.

6. Process for thermal protection according to any one of the preceding claims, in which the thermal protection (16) is selected from the group comprising thermal protection against heat (16b) and thermal protection against cold (16a).

7. Process for thermal protection according to claim 6, applied to the protection of a cryogenic structure (10) in the form of a tube, in which the thermal protection (16) completely surrounds the cryogenic structure (10) and is attached thereto by adhesive bonding and in which the flexible support (14) makes at least two turns around the thermal protection (16).

8. Process for thermal protection according to any one of claims 1 to 5, in which the flexible support (14) is lined with thermal protection against heat (16b) on one side and thermal protection against cold (16a) on the other side.

9. Process for thermal protection according to one of the preceding claims, in which the flexible support (14) has at least one additional feature selected from the group comprising impermeability to fluids, mechanical strength, heat resistance, fire-resistant properties, protection against ultraviolet, electrical conductivity and electrical insulation.

10. A cryogenic structure (10) thermally protected by a complex (12), **characterised in that** the said complex (12) comprises a flexible support (14), flexible thermal protection (16) covering at least one surface of the support (14), the said complex (12) being suitable for being attached to the cryogenic structure (10) by adhesive bonding and the flexible support (14) being equipped with mechanical attachment means (18) adapted to apply pressure between the complex (12) and the protected cryogenic structure (10).

11. A cryogenic structure (10) thermally protected by a complex (12) according to claim 10, in which the flexible support (14) has dimensions greater than those of the thermal protection (16) so that the edges of the support (14) lie beyond those of the thermal protection (16) which covers it.

12. A cryogenic structure (10) thermally protected by a complex (12) according to either of claims 10 and 11, in which the flexible support (14) is a fabric made of a material selected from the group comprising textile, metal, composite and plastics materials.

13. A cryogenic structure (10) thermally protected by a complex (12) according to any one of the preceding claims, in which the mechanical attachment means (18) are mounted on the edges of the flexible support (14).

14. A cryogenic structure (10) thermally protected by a complex (12) according to any one of the preceding claims, in which the mechanical attachment means (18) are selected from the group comprising slider systems, self-gripping systems and pressure snap-connection systems.

15. A cryogenic structure (10) thermally protected by a complex (12) according to any one of the preceding claims, in which the thermal protection (16) is selected from the group comprising thermal protection against heat (16b) and thermal protection against cold (16a).

16. A cryogenic structure (10) thermally protected by a complex (12) according to claim 15, the cryogenic structure (10) being in the shape of a tube, with the thermal protection (16) of the said complex (12) completely surrounding the cryogenic structure (10) and being attached thereto by adhesive bonding and in which the flexible support (14) makes at least two turns around the thermal protection (16).

17. A cryogenic structure (10) thermally protected by a complex (12) according to any one of claims 10 to 14, in which the flexible support (14) is lined with thermal protection against heat (16b) on one side and thermal protection against cold (16a) on the other side.

18. A cryogenic structure (10) thermally protected by a complex (12) according to any one of the preceding claims, in which the flexible support (14) has at least one additional feature selected from the group comprising impermeability to fluids, mechanical strength, heat resistance, fire-resistant properties, protection against ultraviolet, electrical conductivity and electrical insulation.

## Patentansprüche

1. Verfahren zum Wärmeschutz einer cryogenen Struktur (10), **dadurch gekennzeichnet, dass** es die Befestigung eines Wärmeschutzkomplexes (12) an der cryogenen Struktur (10) umfasst, wobei der Komplex (12) eine elastische Halterung (14) umfasst, eine elastische Wärmeschutzeinrichtung (16) mindestens eine Seite der Halterung (14) bedeckt, der Komplex (12) an der cryogenen Struktur (10) durch Ankleben befestigt werden kann, und die elastische Halterung (14) mit mechanischen Verbindungsmitteln (18) versehen ist, die zwischen dem Komplex (12) und der geschützten cryogenen Struktur (10) Druck ausüben können.

2. Wärmeschutzverfahren nach Anspruch 1, wobei die elastische Halterung (14) Dimensionen aufweist, die größer sind als die der Wärmeschutzeinrichtung (16), so dass sich die Ränder der Halterung (14) jenseits der Ränder der Wärmeschutzeinrichtung (16) befinden, die sie bedeckt.

3. Wärmeschutzverfahren nach einem der Ansprüche 1 oder 2, wobei die elastische Halterung (14) ein Gewebe ist, das aus einem Material hergestellt ist, welches aus der aus Textilmaterialien, metallischen Materialien, Verbundmaterialien und Kunststoffen umfassenden Gruppe ausgewählt ist.

4. Wärmeschutzverfahren nach einem der vorangehenden Ansprüche, wobei die mechanischen Verbindungsmittel (18) an den Rändern der elastischen Halterung (14) angebracht sind.

5. Wärmeschutzverfahren nach einem der vorangehenden Ansprüche, wobei die mechanischen Verbindungsmittel (18) aus der Gruppe ausgewählt sind, welche Gleitschienensysteme, selbsthaftende Systeme sowie Druck-Einklicksysteme umfasst.

6. Wärmeschutzverfahren nach einem der vorangehenden Ansprüche, wobei die Wärmeschutzeinrichtung (16) aus der Gruppe ausgewählt ist, die Wärmeschutzeinrichtungen gegen Wärme (16b) sowie Wärmeschutzeinrichtungen gegen Kälte (16a) umfasst.

7. Wärmeschutzverfahren nach Anspruch 6, angewandt auf den Schutz einer cryogenen Struktur (10) in Form eines Rohrs, wobei die Wärmeschutzeinrichtung (16) die cryogene Struktur (10) vollständig umgibt und an dieser durch Ankleben befestigt ist, und wobei die elastische Halterung (14) mindestens zweimal um die Wärmeschutzeinrichtung (16) herumgewickelt ist.

8. Wärmeschutzverfahren nach einem der Ansprüche 1 bis 5, wobei die elastische Halterung (14) mit einem Wärmeschutz gegen Wärme (16b) auf der einen Seite und mit einem Wärmeschutz gegen Kälte (16a) auf der anderen Seite bedeckt ist.

9. Wärmeschutzverfahren nach einem der vorangehenden Ansprüche, wobei die elastische Halterung (14) mindestens eine zusätzliche Eigenschaft aufweist, die aus der Gruppe ausgewählt ist, welche Fluiddichtheit, mechanische Festigkeit, thermische Widerstandsfähigkeit, Feuerfestigkeit, UV-Schutz, elektrische Leitfähigkeit und elektrische Isolierung umfasst.

10. Cryogene Struktur (10), die thermisch durch einen Komplex (12) geschützt ist, **dadurch gekennzeichnet, dass** der Komplex (12) eine elastische Halterung (14) und eine elastische Wärmeschutzeinrichtung (16), die mindestens eine Seite der Halterung (14) bedeckt, umfasst, wobei der Komplex (12) an der cryogenen Struktur (10) durch Ankleben befestigt werden kann und die elastische Halterung (14) mit mechanischen Verbindungsmitteln (18) versehen ist, die zwischen dem Komplex (12) und der geschützten cryogenen Struktur (10) Druck ausüben können.

11. Cryogene Struktur (10), die von einem Komplex (12) gemäß Anspruch 10 thermisch geschützt ist, wobei die elastische Halterung (14) größere Dimensionen als die Wärmeschutzeinrichtung (16) aufweist, so dass die Ränder der Halterung (14) jenseits denjenigen der sie bedeckenden Wärmeschutzeinrichtung (16) gelegen sind.

12. Cryogene Struktur (10), die von einem Komplex (12) gemäß einem der Ansprüche 10 oder 11 thermisch geschützt ist, wobei die elastische Halterung (14) ein Gewebe ist, das aus einem Material hergestellt ist, welches aus der Textilmaterialien, Metallmaterialien, Verbundmaterialien und Kunststoffe umfassenden Gruppe ausgewählt ist.

13. Cryogene Struktur (10), die von einem Komplex (12) gemäß einem der vorangehenden Ansprüche thermisch geschützt ist, wobei die mechanischen Verbindungsmittel (18) an den Rändern der elastischen Halterung (14) angebracht sind.

14. Cryogene Struktur (10), die von einem Komplex (12) gemäß einem der vorangehenden Ansprüche thermisch geschützt ist, wobei die mechanischen Verbindungsmittel (18) aus der Gruppe ausgewählt sind, welche Gleitschienensysteme, selbsthaftende Systeme sowie Druck-Einklicksysteme umfasst.

15. Cryogene Struktur (10), die von einem Komplex (12) gemäß einem der vorangehenden Ansprüche thermisch geschützt ist, wobei die Wärmeschutzeinrichtung (16) aus der Gruppe ausgewählt ist, die Wärmeschutzeinrichtungen gegen Wärme (16b) sowie Wärmeschutzeinrichtungen gegen Kälte (16a) umfasst.

16. Cryogene Struktur (10), die von einem Komplex (12) gemäß Anspruch 15 thermisch geschützt ist, wobei die cryogene Struktur (10) in Form eines Rohrs vorleigt, wobei die Wärmeschutzeinrichtung (16) des Komplexes (12) die cryogene Struktur (10) vollkommen umgibt, und an dieser durch Ankleben befestigt ist, und wobei die elastische Halterung (14) mindestens zweimal um die Wärmeschutzeinrichtung (16) herumgewickelt ist.

17. Cryogene Struktur (10), die von einem Komplex (12) nach einem der Ansprüche 10 bis 14 thermisch geschützt ist, wobei die elastische Halterung (14) mit einem Wärmeschutz gegen Wärme (16b) auf der einen Seite und mit einem Wärmeschutz gegen Kälte (16a) auf der anderen Seite bedeckt ist.

18. Cryogene Struktur (10), die von einem Komplex (12) gemäß einem der vorangehenden Ansprüche thermisch geschützt ist, wobei die elastische Halterung (14) mindestens eine zusätzliche Eigenschaft aufweist, die aus der Gruppe ausgewählt ist, welche Fluid-Dichtheit, mechanische Festigkeit, thermische Widerstandsfähigkeit, Feuerfestigkeit, UV-Schutz, elektrische Leitfähigkeit und elektrische Isolierung umfasst.
